(19) Europäisches Patentamt
European Patent Office
Office européen des brevets

(11) **EP 4 421 134 A1**

(12) **EUROPEAN PATENT APPLICATION**
published in accordance with Art. 153(4) EPC

(43) Date of publication:
**28.08.2024 Bulletin 2024/35**

(21) Application number: 23873117.8

(22) Date of filing: **26.09.2023**

(51) International Patent Classification (IPC):
*C09D 5/16* (2006.01)    *C09D 4/00* (2006.01)
*C09D 183/04* (2006.01)    *C08G 77/18* (2006.01)
*C08G 77/24* (2006.01)    *C08G 65/336* (2006.01)

(52) Cooperative Patent Classification (CPC):
**C08G 65/336; C08G 77/18; C08G 77/24;
C09D 4/00; C09D 5/16; C09D 183/04**

(86) International application number:
**PCT/KR2023/014837**

(87) International publication number:
**WO 2024/072004 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022 KR 20220121583**

(71) Applicant: **LG Chem, Ltd.
Yeongdeungpo-gu
Seoul 07336 (KR)**

(72) Inventors:
• **SEO, Kwangseok**
  **Daejeon 34122 (KR)**
• **PARK, Hee Kwan**
  **Daejeon 34122 (KR)**
• **CHOI, Hee Jung**
  **Daejeon 34122 (KR)**
• **KIM, Hyeon Hui**
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ANTIFOULING ARTICLE**

(57)    The present disclosure relates to an article for antifouling. More specifically, it relates to an article capable of preventing fouling by inorganic chlorides.

**FIG. 1**

Description

BACKGROUND OF THE INVENTION

(a) Field of the Invention

Cross-reference to Related Application

This application claims the benefits of Korean Patent Applications No. 1 0-2022-0121583 filed on September 26, 2022 and No. 10-2023-0129096 filed on September 26, 2023 with the Korean Intellectual Property Office, the disclosure of which is incorporated herein by reference in its entirety.
The present disclosure relates to an article for antifouling. More specifically, it relates to an article capable of preventing fouling by inorganic chlorides.

(b) Description of the Related Art

Antifouling coatings are used industrially to prevent foreign substances from adhering to or to prevent contaminants from attaching to the surfaces of various devices.
Chlorine (Cl) dust is generated as a by-product in the process of recycling waste plastic during cement production. Due to recent environmental issues, a separate chlorine dust treatment facility is being used to extract additional potassium chloride (KCl) from the chlorine dust, which is the by-product.
However, during this chlorine dust treatment process, fouling by potassium chloride often occurs on the surface inside the facility, and when fouling occurs, there is a problem in that the process operation rate is significantly reduced.
Therefore, in order to operate the process smoothly, it is necessary to prevent contaminants of inorganic chlorides such as potassium chloride from attaching to the internal surface of the treatment facility.
However, the surface of stainless steel, which is commonly used as a substrate for such treatment facility, has high wettability and is prone to contamination due to its nature, so periodic cleaning is required. In addition, there is a method of applying a super water-repellent coating or a hydrophobic coating to prevent contaminants from attaching. However, even with this coating, it is not easy to prevent or remove contaminants of inorganic chlorides, and durability of the coating layer is not high, so the effect does not last long.
Accordingly, research is needed on an antifouling coating layer that prevents inorganic chloride contaminants from attaching to the internal surface of the device and can easily remove contaminants even in case of adhesion.

SUMMARY OF THE INVENTION

In order to solve the above problems, there is provided an article for antifouling including a coating layer for antifouling against inorganic chlorides.
According to one embodiment of the present disclosure, there is provided an article for antifouling including

a substrate; and
a coating layer for antifouling against inorganic chlorides provided on at least one surface of the substrate, wherein the coating layer for antifouling against inorganic chlorides satisfies the following Equations 1 to 3:

[Equation 1]

$$80° < REC < 150°$$

[Equation 2]

$$REC / CAH \geq 2.5$$

[Equation 3]

$$CAH \geq 25°$$

in Equations 1 to 3,

REC is receding contact angle for water (unit: °), and

CAH is contact angle hysteresis, which is the difference between advancing contact angle (unit: °) and receding contact angle (unit: °) for water.

According to the article for antifouling of the present disclosure, fouling by inorganic chlorides can be effectively prevented.

In particular, it can effectively prevent the fouling phenomenon in which potassium chloride (KCl) attaches to the internal wall of the treatment device, wherein the potassium chloride is generated during the chlorine dust treatment process which additionally extracts the potassium chloride from chlorine dust generated as a by-product in the process of recycling waste plastic during cement production.

## BRIEF DESCRIPTION OF THE DRAWINGS

FIG. 1 is a schematic diagram showing a process of forming a salt dome on the surface of an antifouling coating layer according to an embodiment of the present disclosure.

FIG. 2 is a diagram schematically showing a cross section of a salt dome according to an embodiment of the present disclosure.

FIG. 3 is a schematic diagram showing a process in which a salt dome is not formed on the surface of a coating layer according to Comparative Example of the present disclosure.

FIG. 4 is a schematic diagram showing a process in which a salt dome is not formed on the surface of a substrate according to Comparative Example of the present disclosure.

FIG. 5 shows photographs of a salt dome (A) according to an embodiment of the present disclosure and domes (B, C) of Comparative Examples.

## DETAILED DESCRIPTION OF THE EMBODIMENTS

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention.

The singular forms are intended to include the plural forms as well, unless the context clearly indicates otherwise.

It will be further understood that the terms "include", "comprise", or "have" when used in this disclosure, specify the presence of stated features, numbers, steps, components, or combinations thereof, but do not preclude the presence or addition of one or more other features, numbers, steps, components, or combinations thereof.

Also, as used herein, when a layer or an element is mentioned to be formed "on" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the article for antifouling according to an embodiment of the present invention will be described in detail.

An article for antifouling according to one embodiment of the present disclosure includes a substrate; and a coating layer for antifouling against inorganic chlorides provided on at least one surface of the substrate, wherein the coating layer for antifouling against inorganic chlorides satisfies the following Equations 1 to 3:

$$[\text{Equation 1}]$$

$$80° < REC < 150°$$

[Equation 2]

$$REC / CAH \geq 2.5$$

[Equation 3]

$$CAH \geq 25°$$

in Equations 1 to 3,
REC is receding contact angle for water (unit: °), and
CAH is contact angle hysteresis, which is the difference between advancing contact angle (unit: °) and receding contact angle (unit: °) for water.

As used herein, the terminology "contact angle" refers to the angle between the gas/liquid interface and the solid surface formed by a liquid droplet placed on a solid surface. This contact angle can be measured by various methods, and in this specification, the contact angle of the droplet was measured using the sessile drop method with a commercial contact angle measuring device (manufactured by KRUSS, model name: DSA-100).

The contact angle is a measure of wettability of the surface. A low contact angle indicates high wettability, and a high contact angle indicates low wettability.

Additionally, in this specification, the terminology "advancing contact angle" refers to the maximum contact angle that can be achieved without moving the contact line between the droplet and the surface. In actual measurement, it is defined as the contact angle when the contact line of the droplet begins to move while continuously adding a small amount of water.

Further, in this specification, the terminology "receding contact angle" refers to the minimum contact angle that can be achieved without moving the contact line between the droplet and the surface. In actual measurement, it is defined as the angle just before the interface of three phases (solid/liquid/gas) moves as the amount of water is gradually reduced through the syringe needle by which the water is injected.

In addition, in this specification, the advancing and receding contact angles were measured at atmospheric pressure (1 atm) and 25 °C using water droplets.

Additionally, the terminology "CAH" used herein refers to contact angle hysteresis, which is the difference between the advancing contact angle and the receding contact angle measured as above.

While researching a method to prevent contaminants, especially inorganic chlorides, from attaching to the surface of a substrate or coating layer, the present inventors have discovered that when the contact angle of the surface satisfies a predetermined condition, coating durability is very excellent and adhesion of inorganic chloride contaminants can be effectively prevented, thereby completing the present invention.

More specifically, when the surface of a coating layer satisfies the contact angle condition of one embodiment of the present disclosure, it was confirmed that even if a solution containing inorganic chlorides such as potassium chloride (KCl) was attached to the surface of a coating layer, it dried in a dome-like shape that was hollow and had a minimized contact area with the surface of the coating layer. Accordingly, fouling caused by inorganic chlorides can be prevented, and the dome shape is maintained even after drying, so it can be removed as it is, making removal of contaminants very easy.

In addition, it has been confirmed that the dome is not formed or maintained simply because the surface of the coating layer is hydrophobic or the contact angle is high, and can be formed during drying only when the receding contact angle, contact angle hysteresis, and ratio of receding contact angle to contact angle hysteresis of Equations 1 to 3 according to an embodiment of the present invention satisfy certain conditions.

As an example, the inorganic chloride anti-fouling coating layer of the present disclosure satisfies all of the following Equations 1 to 3.

[Equation 1]

$$80° < REC < 150°$$

[Equation 2]

$$REC / CAH \geq 2.5$$

[Equation 3]

$$CAH \geq 25°$$

in Equations 1 to 3,
REC is receding contact angle for water (unit: °), and
CAH is contact angle hysteresis, which is the difference between advancing contact angle (unit: °) and receding contact angle (unit: °) for water.

The coating layer for antifouling against inorganic chlorides according to an embodiment of the present disclosure satisfies the Equation 1 above. That is, the receding contact angle (REC) may be more than 80°, 85° or more, 90° or more, 95° or more, or 100° or more, and less than 150°, 145° or less, 140° or less, 135° or less, or 130° or less.

Additionally, the coating layer for antifouling against inorganic chlorides according to an embodiment of the present disclosure satisfies the Equation 2 above. That is, the ratio of receding contact angle to contact angle hysteresis (REC / CAH) may be 2.5 or more, 2.8 or more, 3.0 or more, 3.1 or more, or 3.2 or more, and 10 or less, 9 or less, 8 or less, 7 or less, 6 or less, 5 or less, 4 or less, or 3.5 or less.

Further, the coating layer for antifouling against inorganic chlorides according to an embodiment of the present disclosure satisfies the Equation 3 above. That is, the contact angle hysteresis (CAH) may be 25° or more, 26° or more, or 28° or more, and 60° or less, 50° or less, 40° or less, 35° or less, or 32° or less.

In an embodiment of the present disclosure, the substrate may be stainless steel such as SUS and STS, or glass, but is not limited thereto.

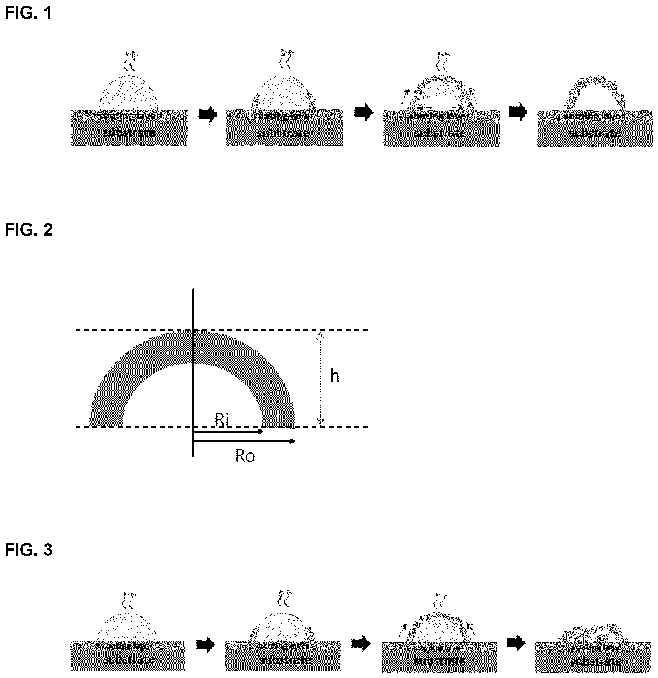

FIG. 1 is a schematic diagram showing the process of forming a salt dome on the surface of a coating layer according to an embodiment of the present disclosure.

When the receding contact angle, the contact angle hysteresis, and the ratio of receding contact angle to contact angle hysteresis satisfy the Equations 1 to 3 according to an embodiment of the present disclosure, the inorganic chloride solution is attached to the surface of the coating layer to form droplets and dried.

More specifically, referring to FIG. 1, as the droplet of the inorganic chloride solution attached to the surface of the coating layer dries, a solid salt is generated from the edge along the boundary between the droplet and the air. As the droplet continues to dry, the salt continues to grow along the boundary of the droplet, and the droplet remaining inside continues to be absorbed into the salt dome and evaporates to the outside, eventually forming a salt dome, which is a hollow dome made of salt. Meanwhile, when certain conditions of Equations 1 to 3 according to an embodiment of the present disclosure are satisfied, the formed salt dome maintains its shape on a flat surface. However, when the surface is tilted, for example, around 45 degrees, it easily falls off without strong external force and leaves no residue, making removal very easy.

The coating layer for antifouling against inorganic chlorides of the present disclosure is not limited to a coating layer with specific components. If the coating layer simultaneously satisfies the Equations 1 to 3, a salt dome is formed during the attachment and drying of chlorides on the surface of the coating layer regardless of the structure, composition, manufacturing method, etc. of the coating layer, which can provide the effect of easy removal.

When the receding contact angle (REC) for water is 80° or less, the salt or solution inside the droplet does not move to the outside and tends to remain in contact with the coating layer. In this process, salt components may remain on the surface of the coating layer when drying. On the other hand, when REC is too high, above 150°, the droplet dries in a nearly spherical state, and the solution inside the droplet continues to move to the outside rather than the solution near the surface, causing the solution near the surface to evaporate in the latter half of drying. Therefore, salts may remain in the part of the droplet that contacts the surface, and a salt dome may not be formed.

In addition, when the contact angle hysteresis (CAH) is less than 25°, the interface between the droplet and the surface in the salt dome is not fixed and tends to move freely, so as the droplet dries, the droplet interface may gradually move into the inside of the salt dome. Therefore, the size of the dome itself gradually decreases during the drying process and the dome becomes lumped, making it impossible to maintain the shape of the salt dome.

Therefore, in order to maintain the shape of the salt dome without salt components remaining on the surface of the coating layer, each of REC and CAH needs to be high above a certain level. However, when the ratio of CAH to REC is too large, the shape of the salt dome may be distorted during the drying process, making it difficult to maintain the shape of the salt dome after drying.

Therefore, for the formation and maintenance of the salt dome, the ratio of REC to CAH is also important, so that when the conditions of Equations 1 to 3 are simultaneously satisfied, no salt component can remain on the surface of the coating layer while maintaining the shape of the salt dome during the drying process of the droplet.

FIG. 2 is a diagram schematically showing a cross section of a salt dome according to an embodiment of the present disclosure. In FIG. 2, Ro is the outer radius of the salt dome, Ri is the inner radius of the salt dome, and h is the height of the salt dome.

Referring to FIG. 2, when the ratio of the dome height to the outer radius (Ro) in the salt dome is 0.5 or more (h/Ro ≥ 0.5), and the area of the empty space at the contact surface between the salt dome and the surface is 50% or more ($Ri^2/Ro^2 \geq 0.5$), the salt dome as defined in the present disclosure can be considered to have been formed.

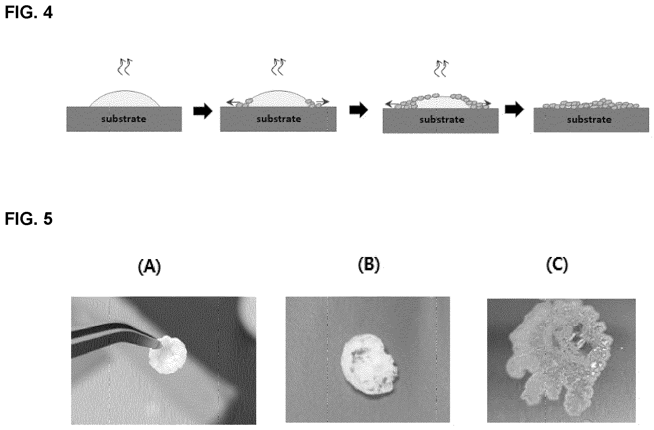

In contrast, FIG. 3 is a schematic diagram showing a process in which a salt dome is not formed on the surface of a coating layer according to Comparative Example of the present disclosure, and FIG. 4 is a schematic diagram showing a process in which a salt dome is not formed on the surface of a substrate according to Comparative Example of the present disclosure.

Referring to FIG. 3, initially, as the droplet of the inorganic chloride solution attached to the surface of the coating layer dries, salts may be generated from the edge along the boundary between the droplet and the air, similar to the present disclosure. However, if one or more of the conditions of Equations 1 to 3 according to an embodiment of the present disclosure are not satisfied, the shape of the salt dome cannot be formed as the drying of the droplet continues, resulting in an incomplete or distorted dome. Thus, the salt components remain irregularly attached to the surface.

FIG. 4 shows a case where droplets of an inorganic chloride solution are attached to a surface of the coating layer having a low contact angle, such as SUS. The salt generated during the drying process of the droplet does not form a dome shape at all and spreads over the entire surface and adheres strongly, making it difficult to remove and causing fouling.

FIG. 5 shows photographs of a salt dome (A) according to an embodiment of the present disclosure and domes (B, C) of Comparative Examples.

In FIG. 5, (A) is a photograph of a fully formed salt dome removed from the surface according to an embodiment of the present disclosure, (B) is a photograph of an incompletely formed dome, and (C) is a photograph of chlorides spread and attached to the surface without forming a dome.

The coating layer for antifouling against inorganic chlorides satisfying the above characteristics includes, for example, a first coating layer containing a cured product of alkyl-trialkoxy silane and tetraalkoxy silane; and a second coating layer formed on the first coating layer and containing a cured product of fluoropolyether silane, but is not limited thereto:

The alkyl-trialkoxy silane may be a compound represented by the following Chemical Formula 1.

[Chemical Formula 1]          $R_{11}\text{-}Si(R_{12})(R_{13})(R_{14})$

In Chemical Formula 1,
$R_{11}$ is an alkyl group having 1 to 5 carbon atoms, and
$R_{12}$ to $R_{14}$ are each independently an alkoxy group having 1 to 5 carbon atoms.

According to one embodiment of the present disclosure, the tetraalkoxy silane may be a compound represented by the following Chemical Formula 2.

[Chemical Formula 2]          $Si(R_{21})(R_{22})(R_{23})(R_{24})$

In Chemical Formula 2,
$R_{21}$ to $R_{24}$ are each independently an alkoxy group having 1 to 5 carbon atoms.

According to one embodiment of the present disclosure, the first coating solution may include 1 to 50 parts by weight of tetraalkoxy silane based on 100 parts by weight of alkyl-trialkoxy silane.

According to one embodiment of the present disclosure, the first coating solution may include 1 to 10 parts by weight of an organic acid based on 100 parts by weight of alkyl-trialkoxy silane.

According to an embodiment of the present disclosure, the fluoropolyether silane may be a compound including a moiety represented by the following Chemical Formulae 3-1 to 3-4.

[Chemical Formula 3-1]          $CF_3\text{-}$

[Chemical Formula 3-2]     $-CF_2-CF_2-O-$

[Chemical Formula 3-3]     $-CF_2-CF_2-CF_2-O-$

[Chemical Formula 3-4]     $-Si(R_{31})(R_{32})(R_{33})$

In Chemical Formula 3-4,
$R_{31}$ to $R_{33}$ are each independently an alkoxy group having 1 to 5 carbon atoms.

According to an embodiment of the present disclosure, curing of the first coating solution and curing of the second coating solution may be independently performed at a temperature of 100 to 150 °C.

According to one embodiment of the present disclosure, the cured thickness of the first coating layer may be about 0.1 to about 100 $\mu$m, more preferably about 1 to about 50 $\mu$m, or about 2 to about 10 $\mu$m. When the cured thickness of the first coating layer is within the above range, cracks can be prevented while maintaining appropriate coating hardness.

Further, the cured thickness of the second coating layer may be about 1 to about 100 nm, or about 5 to about 50 nm. Specifically, the second coating layer may be in a state in which the fluoropolyether silane contained in the second coating solution is applied as a substantially mono-molecule layer. When the cured thickness of the second coating layer is within the above range, a uniform coating layer and an appropriate surface energy level can be maintained.

According to one aspect of the present disclosure, it may be formed by a method including applying a first coating solution containing alkyl-trialkoxy silane, tetraalkoxy silane, and an organic acid; curing the applied first coating solution to form a first coating layer; applying a second coating solution containing fluoropolyether silane on the first coating layer; and curing the applied second coating solution to form a second coating layer.

In the method according to one embodiment of the present disclosure, a first coating solution containing alkyl-trialkoxy silane, tetraalkoxy silane, and an organic acid is first applied to a surface of a substrate.

According to one embodiment of the present disclosure, the alkyl-trialkoxy silane may be a compound represented by the following Chemical Formula 1.

$$R_{11}-Si(R_{12})(R_{13})(R_{14})$$

In Chemical Formula 1,
$R_{11}$ is an alkyl group having 1 to 5 carbon atoms, and
$R_{12}$ to $R_{14}$ are each independently an alkoxy group having 1 to 5 carbon atoms.

More specifically, $R_{11}$ may be methyl, ethyl, propyl, butyl, or pentyl, and may be straight-chain or branched-chain.

$R_{12}$ to $R_{14}$ may each independently be methoxy, ethoxy, propoxy, butoxy, or pentoxy, and may be straight-chain or branched-chain.

Specifically, the alkyl-trialkoxy silane may be, for example, at least one selected from the group consisting of methyl-trimethoxy silane, methyl-triethoxy silane, methyl-tripropoxy silane, methyl-tributoxysilane, methyl-tripentoxysilane, ethyl-trimethoxy silane, ethyl-triethoxy silane, ethyl-tripropoxy silane, ethyl-tributoxysilane, ethyl-tripentoxysilane, propyl-trimethoxy silane, propyl-triethoxy silane, propyl-tripropoxy silane, propyl-tributoxysilane, propyl-tripentoxysilane, butyl-trimethoxy silane, butyl-triethoxy silane, butyl-tripropoxy silane, butyl-tributoxysilane, butyl-tripentoxysilane, pentyl-trimethoxy silane, pentyl-triethoxy silane, pentyl-tripropoxy silane, pentyl-tributoxysilane, and pentyl-tripentoxysilane.

The alkyl-trialkoxy silane described above is a component constituting the main network of the inorganic coating film through a sol-gel reaction in the composition. At this time, the alkyl group can increase flexibility of the network structure and relieve stress that occurs on reaction between silanols or between silanols and the metal oxide layer on the surface of the substrate. When only alkyl silanes are used, the number of silanols participating in the reaction is small, which is disadvantageous in lowering the surface energy during subsequent fluorine coating, and when only alkoxy silanes are used, it may be difficult to obtain the above-mentioned stress relief effect.

According to one embodiment of the present disclosure, the tetraalkoxy silane may be a compound represented by the following Chemical Formula 2.

[Chemical Formula 2]     $Si(R_{21})(R_{22})(R_{23})(R_{24})$

In Chemical Formula 2,

$R_{21}$ to $R_{24}$ are each independently an alkoxy group having 1 to 5 carbon atoms.

More specifically, $R_{21}$ to $R_{24}$ may each independently be methoxy, ethoxy, propoxy, butoxy, or pentoxy, and may be straight-chain or branched-chain.

Specifically, the tetraalkoxy silane may be, for example, at least one selected from the group consisting of tetramethoxy silane, tetraethoxy silane, tetrapropoxy silane, tetrabutoxy silane, and tetrapentoxy silane.

Tetraalkoxy silanes as described above can increase silanol groups that can participate in the reaction between the above-mentioned silanols or between silanols and the metal oxide layer on the surface of the substrate in the composition, and this helps to realize a surface with low surface energy by increasing reactivity with fluorine silane in the subsequent process.

When using alkyl-trialkoxy silane and tetraalkoxy silane at an appropriate ratio, the problem of cracks occurring in the entire coating layer network can be prevented and an appropriate amount of silanol reactive groups can be provided on the surface.

According to one embodiment of the present disclosure, the organic acid may be a carboxylic acid having 1 to 5 carbon atoms.

Specifically, the organic acid may be, for example, at least one selected from the group consisting of formic acid, acetic acid, and propionic acid.

The above organic acid is used as a catalyst to promote hydrolysis of silane groups in the composition and can play a role in determining the overall network structure. Under acidic conditions with low pH, the hydrolysis rate is superior to the condensation reaction rate, so the bond by silane forms a linear structure. On the other hand, under basic conditions, the condensation reaction rate is faster, forming a particulate structure. Inorganic acids such as hydrochloric acid, rather than organic acids, can also be used, but organic acids can be more useful in controlling the gel time.

According to one embodiment of the present disclosure, the first coating solution may include about 1 to 50 parts by weight of tetra alkoxy silane based on 100 parts by weight of alkyl-trioxy silane.

When using tetraalkoxy silane within the above range, it can be advantageous to achieve appropriate surface energy and excellent adhesion.

According to one embodiment of the present disclosure, the first coating solution may include about 1 to about 10 parts by weight of an organic acid based on 100 parts by weight of alkyl-trialkoxy silane.

When using the organic acid within the above range, a linear structure network can be obtained at an appropriate hydrolysis rate, and mechanical properties of the coating layer can be maintained.

The pH of the first coating solution may be about 7 or less, about 5 or less, or about 3 or less, and about 1 or more, or about 2 or more.

The pH can affect the hydrolysis rate and the condensation reaction rate, and a difference in these two reaction rates determines the structure of the coating film. In addition, it affects storage stability of the prepared coating solution.

From this point of view, a stable inorganic coating film can be obtained under acidic conditions having the pH within the above range.

The first coating solution may further include an organic solvent in addition to the components described above. Such an organic solvent may specifically include alcohols or ethers, and the amount of the organic solvent may be appropriately selected in consideration of coating and drying after coating.

When applying the first coating solution to the surface of the substrate, the application thickness may be about 0.1 to about 100 μm, more preferably about 1 to about 50 μm, or about 2 to about 10 μm, based on the thickness after drying and curing. When the cured thickness of the first coating layer is within the above range, cracks can be prevented while maintaining appropriate coating hardness.

The application method is not particularly limited, and methods commonly used in the technical field to which the present invention pertains may be selected, such as applying directly with a tool such as a brush, spraying after appropriately adjusting the viscosity, or coating using a bar.

After application, drying can be performed at room temperature for about 10 minutes to about 1 hour. These drying conditions may vary depending on the type and amount of solvent used together.

After drying, curing may be performed for about 30 minutes to about 2 hours at a temperature of about 100 to about 150 °C.

In the curing process, a sol-gel reaction of the alkyl-trialkoxy silane in the above-described first coating solution and the silane group in the tetraalkoxy silane compound may proceed to form a first coating layer.

According to an embodiment of the present disclosure, the fluoropolyether silane may be a compound including a moiety represented by the following Chemical Formulae 3-1 to 3-4.

[Chemical Formula 3-1]  $CF_3-$

[Chemical Formula 3-2]     $-CF_2-CF_2-O-$

[Chemical Formula 3-3]     $-CF_2-CF_2-CF_2-O-$

[Chemical Formula 3-4]     $-Si(R_{31})(R_{32})(R_{33})$

In Chemical Formula 3-4,

$R_{31}$ to $R_{33}$ are each independently an alkoxy group having 1 to 5 carbon atoms.

The above-described fluoropolyether silane is a compound having fluorocarbons at one end, an alkoxy silane group at the other end, and a fluoroethoxy or fluoropropoxy group in the middle. It can form a hard coating layer by directly forming a covalent bond with the first coating layer, and can extremely lower the surface energy of the coating layer due to a lot of fluorine chains.

In the second coating solution, the fluoropolyether silane can be used with an alkoxy fluoroalkyl-based solvent.

The alkoxy fluoroalkyl-based solvent used herein may be an ether compound represented by the following Chemical Formula 4.

$$CF_3-(CF_2)n-O-(CH_2)m-CH_3$$

In the Chemical Formula, n and m may each independently be an integer of 1 to 5.

In the ether compound, an alkyl group with no fluorine substituted is connected to one side of the oxygen, and an alkyl group in which all hydrogen atoms are substituted with fluorine is connected to the other side of the oxygen.

Such ether compounds are excellent in compatibility with the fluoropolyether silane compound described above, and can uniformly disperse the fluoropolyether silane compound in the second coating solution.

When applying the second coating solution to the surface of the substrate on which the first coating layer is formed, the application thickness may be about 1 to about 100 nm. Specifically, the second coating layer may be in a state in which the fluorinated polyether silane contained in the second coating solution is applied as a substantially mono-molecule layer. When the cured thickness of the second coating layer is within the above range, a uniform coating layer and an appropriate surface energy level can be maintained.

The application method is not particularly limited, and methods commonly used in the technical field to which the present invention pertains may be selected, such as applying directly with a tool such as a brush, spraying after appropriately adjusting the viscosity, or coating using a bar.

After application, drying can be performed at room temperature for about 10 minutes to about 1 hour. These drying conditions may vary depending on the type and amount of solvent used together.

After drying, curing may be performed for about 30 minutes to about 2 hours at a temperature of about 100 to about 150 °C.

In the curing process, the fluoropolyether silane in the above-described second coating solution interacts with the functional group contained in the first coating layer to form a second coating layer.

According to one embodiment of the present disclosure, the cured thickness of the first coating layer may be about 0.1 to about 100 μm.

In addition, the cured thickness of the second coating layer may be about 1 to about 100 nm.

As the coating layer for antifouling against inorganic chlorides provided by one embodiment of the present disclosure as described above satisfies the above-mentioned equations 1 to 3, a salt dome shape is formed when droplets of the inorganic chloride solution are attached. This salt dome is easy to remove and can prevent surface contamination or fouling caused by inorganic chlorides, and thus can provide various products with excellent anti-fouling effects.

Hereinafter, the function and effect of the present invention will be described in more detail through specific examples. However, these examples are for illustrative purposes only, and the invention is not intended to be limited by these examples.

**<Examples>**

**Example 1**

First coating solution

5 parts by weight of methyl-trimethoxy silane as the alkyl-trialkoxy silane component, 1 part by weight of tetraethoxy silane as the tetraalkoxy silane component, and 4 parts by weight of 6 wt% acetic acid solution diluted in water as the organic acid component were mixed (pH: about 2.3).

The first coating solution was prepared by diluting 100 parts by weight of the above coating solution with about 50 parts by weight of isopropyl alcohol as a solvent.

Second coating solution

As a fluoropolyether silane component, Optool-DSX, a perfluoropolyether-silane manufactured by Daikin, was used by dissolving it in a solvent, Novec-7200 manufactured by 3M, at a concentration of 1 wt%.

**Formation of coating layer for antifouling against inorganic chlorides**

The first coating solution was applied to the surface of a stainless steel substrate (Stainless steel 316, 10 cm x 10 cm) using a brush, dried at room temperature for about 30 minutes, and then cured for about 1 hour at a temperature of about 130 °C to form a first coating layer with a thickness of about 5 $\mu$m.

The second coating solution was applied thereto using a brush, dried at room temperature for about 30 minutes, and then cured for about 1 hour at a temperature of about 130 °C to form a second coating layer with a thickness of about 10 nm.

**Example 2**

A coating layer for antifouling against inorganic chlorides was formed in the same manner as in Example 1, except that Optool-DSX, a perfluoropolyether-silane manufactured by Daikin, was used by dissolving it in a solvent, Novec-7200 manufactured by 3M, at a concentration of 0.1 wt% in the second coating solution of Example 1.

**Comparative Example 1**

Only the same stainless steel substrate of Example 1 was used as Comparative Example 1.

**Comparative Example 2**

After completely drying a slide glass that had been thoroughly washed with isopropyl alcohol and acetone, 20 cst silicone oil (DMS-T12, manufactured by Gelest) was applied to the front of the slide glass using a brush. It was stood vertically for about an hour to remove excess oil from the surface, and then reacted at 130 °C for 24 hours. After the reaction, the remaining silicone oil was washed with isopropyl alcohol and acetone.

**Comparative Example 3**

10 parts by weight of base and 1 part by weight of hardener were mixed using the Sylgard 184 Elastomer Kit (Dow Corning), and air bubbles were removed. It was poured into a Petri dish to a thickness of 5 mm and cured in an oven at 70 °C for 3 hours.

**Comparative Example 4**

The super water-repellent coating was prepared using Neverwet spray (Rust-Oleum Corporation), a commercial super water-repellent coating product. The Neverwet Base coating was first coated on a SUS substrate and dried at room temperature for 1 hour. Neverwet Top coating was applied on the first coating and dried at 70 °C for 1 hour.

**Comparative Example 5**

The S.PDMS 1 solution of Example 7 of Korean Patent Publication No. 2015-0033725 was prepared and coated on a stainless steel substrate (Stainless steel 316, 10 cm x 10 cm), followed by curing at 120 °C for 3 hours.

**Comparative Example 6**

90.9 parts by weight of Dow's Sylgard 184 silicone elastomer kit base resin and 9.1 parts by weight of Dow's Sylgard 184 silicone elastomer kit cross-linking agent were mixed, and air bubbles were removed. This was applied to the surface of a stainless steel substrate (Stainless steel 316, 10 cm x 10 cm) and cured at 120 °C for 3 hours.

## Comparative Example 7

45 parts by weight of Dow's Sylgard 184 silicone elastomer kit base resin, 4.5 parts by weight of Dow's Sylgard 184 silicone elastomer kit cross-linking agent and 50.5 parts by weight of silicone oil (manufactured by Gelest, product name: DMS-T11) were mixed, and air bubbles were removed. This was applied to the surface of a stainless steel substrate (Stainless steel 316, 10 cm x 10 cm) and cured at 120 °C for 3 hours.

## Comparative Example 8

The sample prepared in Comparative Example 7 was immersed in DMS-T11 (Mw: 1,250 g/mol) silicone oil at room temperature for 24 hours, taken out, and stood vertically for 30 minutes to remove residual oil from the surface.

[Table 1]

| | Static contact angle (unit: °) | ADV (unit: °) | REC (unit: °) | CAH (unit: °) | REC/CAH |
|---|---|---|---|---|---|
| Example 1 | 115 | 123 | 95 | 28 | 3.4 |
| Example 2 | 114 | 122 | 91 | 31 | 2.9 |
| Comparative Example 1 | 80 | 85 | 20 | 65 | 0.3 |
| Comparative Example 2 | 96 | 98 | 78 | 20 | 3.9 |
| Comparative Example 3 | 115 | 122 | 83 | 39 | 2.1 |
| Comparative Example 4 | 159 | 160 | 157 | 3 | 52.3 |
| Comparative Example 5 | 101 | 109 | 86 | 23 | 3.74 |
| Comparative Example 6 | 116 | 122 | 83 | 39 | 2.1 |
| Comparative Example 7 | 110 | 113 | 101 | 12 | 8.4 |
| Comparative Example 8 | 111 | 111 | 110 | 1 | 110 |

In Table 1,
ADV is advancing contact angle for water at 25 °C (unit: °),
REC is receding contact angle for water at 25 °C (unit: °), and
CAH is contact angle hysteresis, which is the difference between advancing contact angle (unit: °) and receding contact angle (unit: °) for water at 25 °C.

## <Experimental Examples>

### (1) Confirmation of salt dome formation

400 g of KCl (99.0%, DUKSAN pure chemicals co.) was completely dissolved in 1 kg of distilled water at a temperature of 80 °C, and cooled to room temperature at 25 °C. Then, the remaining solution after KCl precipitation was used as a saturated KCl solution. To evaluate the KCl salt dome, 50 $\mu$L of the saturated KCl solution was dropped at 10 different points on the sample surface using a pipette. After drying in an oven at 60 °C for 12 hours, the shape of the salt dome was checked.

After drying, it was observed whether a salt dome with a ratio of the dome height to the outer radius (Ro) of 0.5 or more ($h/Ro \geq 0.5$) and an area of the empty space at the contact surface between the salt dome and the surface of 50% or more ($Ri^2/Ro^2 \geq 0.5$) was formed on the surface.

If a salt dome satisfying the above conditions was formed, it was evaluated as O. If a dome, which is an incomplete salt dome not satisfying the above conditions, was formed, or if chlorides spread and adhered to the surface without a dome shape, it was evaluated as X.

**(2) Confirmation of attachment of salt dome or chlorides**

After observing the formation of the salt dome in (1), the number of salt domes (or chloride attachments if the salt dome was not formed) falling from the surface when tilted so that the angle between the surface and the ground is 45° was measured, and evaluated as follows.

    O : Four or more salt domes or attachments were attached
    △ : One to three salt domes or attachments were attached
    X : Salt dome or all attachments fell off

**(3) Residue**

After evaluating whether the salt dome was attached in (2), if there was no residue visible to the naked eye on the surface of the area where the salt domes or attachments had been removed, it was evaluated as X, and if residue remained, it was evaluated as O.

**(4) Scratch resistance**

For the surface of the coating layer of Examples and Comparative Examples, 0.1 g of potassium chloride per unit area ($cm^2$) was placed between the two substrate surfaces, and then 100 reciprocating movements of 1 cm were performed under a load of 1000 $N/m^2$. After the scratch test, if no scratches were observed with the naked eye on the surface, it was evaluated as O, and if scratches occurred, it was evaluated as X.

[Table 2]

|  | Salt dome formation | Attachment of salt dome or chlorides | Residue | Scratch resistance |
|---|---|---|---|---|
| Example 1 | O | X | X | O |
| Example 2 | O | X | X | O |
| Comparative Example 1 | X | O | O | X |
| Comparative Example 2 | X | X | O | O |
| Comparative Example 3 | X | X | O | X |
| Comparative Example 4 | X | O | O | X |
| Comparative Example 5 | X | O | O | X |
| Comparative Example 6 | X | △ | O | X |
| Comparative Example 7 | X | O | O | X |
| Comparative Example 8 | X | O | O | X |

Referring to Table 2, in Examples 1 to 2 that satisfy all of Equations 1 to 3 for the surface of the coating layer, a salt dome was formed as the chlorides attached to the surface dried, and the formed salt dome easily fell off without excessive external force. Thus, it was evaluated as being very effective in antifouling against chlorides as no residue was left behind.

On the other hand, in Comparative Examples that do not satisfy any one or more of Equations 1 to 3, the salt dome was not formed under the same conditions as Examples (Comparative Examples 1 to 8) or attachments remained on the surface (Comparative Examples 1, 4 to 8), and thus there was little antifouling effect against chlorides.

**Claims**

1. An article for antifouling, comprising

   a substrate; and
   a coating layer for antifouling against inorganic chlorides provided on at least one surface of the substrate,
   wherein the coating layer for antifouling against inorganic chlorides satisfies the following Equations 1 to 3:

$$[\text{Equation 1}]$$

$$80^{\circ} < REC < 150^{\circ}$$

$$[\text{Equation 2}]$$

$$REC / CAH \geq 2.5$$

$$[\text{Equation 3}]$$

$$CAH \geq 25^{\circ}$$

   in Equations 1 to 3,
   REC is receding contact angle for water (unit: °), and
   CAH is contact angle hysteresis, which is the difference between advancing contact angle (unit: °) and receding contact angle (unit: °) for water.

2. The article for antifouling of Claim 1,
   wherein the REC / CAH of Equation 2 is 10 or less.

3. The article for antifouling of Claim 1,
   wherein the REC of Equation 1 is 85° or more.

4. The article for antifouling of Claim 1,
   wherein the CAH of Equation 3 is 60° or less.

5. The article for antifouling of Claim 1,
   wherein the inorganic chlorides comprise potassium chloride (KCl).

6. The article for antifouling of Claim 1,

   wherein the coating layer for antifouling against inorganic chlorides comprises
   a first coating layer containing a cured product of alkyl-trialkoxy silane and tetraalkoxy silane; and
   a second coating layer formed on the first coating layer and containing a cured product of fluoropolyether silane.

7. The article for antifouling of Claim 6,
   wherein the alkyl-trialkoxy silane is a compound represented by the following Chemical Formula 1:

   $$[\text{Chemical Formula 1}] \qquad R_{11}\text{-Si}(R_{12})(R_{13})(R_{14})$$

   in Chemical Formula 1,
   $R_{11}$ is an alkyl group having 1 to 5 carbon atoms, and
   $R_{12}$ to $R_{14}$ are each independently an alkoxy group having 1 to 5 carbon atoms.

8. The article for antifouling of Claim 6,
   wherein the tetraalkoxy silane is a compound represented by the following Chemical Formula 2:

   [Chemical Formula 2]         $Si(R_{21})(R_{22})(R_{23})(R_{24})$

   in Chemical Formula 2,
   $R_{21}$ to $R_{24}$ are each independently an alkoxy group having 1 to 5 carbon atoms.

9. The article for antifouling of Claim 6,
   wherein the fluoropolyether silane is a compound comprising a group represented by the following Chemical Formulae 3-1 to 3-4:

   [Chemical Formula 3-1]         $CF_3-$

   [Chemical Formula 3-2]         $-CF_2-CF_2-O-$

   [Chemical Formula 3-3]         $-CF_2-CF_2-CF_2-O-$

   [Chemical Formula 3-4]         $-Si(R_{31})(R_{32})(R_{33})$

   In Chemical Formula 3-4,
   $R_{31}$ to $R_{33}$ are each independently an alkoxy group having 1 to 5 carbon atoms.

10. The article for antifouling of Claim 1,
    wherein the substrate is stainless steel.

**FIG. 1**

**FIG. 2**

**FIG. 3**

FIG. 4

FIG. 5

(A)　　　　　　　　(B)　　　　　　　　(C)

## INTERNATIONAL SEARCH REPORT

| International application No. |
|---|
| **PCT/KR2023/014837** |

| A. | CLASSIFICATION OF SUBJECT MATTER |
|---|---|

**C09D 5/16**(2006.01)i; **C09D 4/00**(2006.01)i; **C09D 183/04**(2006.01)i; **C08G 77/18**(2006.01)i; **C08G 77/24**(2006.01)i; **C08G 65/336**(2006.01)i

According to International Patent Classification (IPC) or to both national classification and IPC

| B. | FIELDS SEARCHED |
|---|---|

Minimum documentation searched (classification system followed by classification symbols)

C09D 5/16(2006.01); B05D 1/36(2006.01); B32B 15/082(2006.01); B32B 9/04(2006.01); C08F 20/22(2006.01); C09D 183/04(2006.01); C09D 201/00(2006.01); C09D 5/00(2006.01); C09K 3/18(2006.01); C23C 14/10(2006.01); C23C 16/44(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 오염방지(antifouling), 코팅(coating), 후진 접촉각(receding contact angle), 접촉각 이력(contact angle hysteresis), 실란(silane)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2010-0129672 A1 (HAO, L. et al.) 27 May 2010 (2010-05-27)<br>See claims 1 and 12; and paragraphs [0003], [0063], [0065], [0097]-[0099] and [0116]-[0117]. | 1-5,10 |
| A | | 6-9 |
| A | WO 2019-240093 A1 (AGC INC.) 19 December 2019 (2019-12-19)<br>See claim 1; and paragraphs [0024], [0041] and [0063]. | 1-10 |
| A | JP 2022-019568 A (TOSOH FINECHEM CORP.) 27 January 2022 (2022-01-27)<br>See entire document. | 1-10 |
| A | US 2021-0269671 A1 (THE BOARD OF TRUSTEES OF THE UNIVERSITY OF ILLINOIS) 02 September 2021 (2021-09-02)<br>See entire document. | 1-10 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2024** | **05 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/014837** |

**C.      DOCUMENTS CONSIDERED TO BE RELEVANT**

| Category* | Citation of document, with indication, where appropriate, of the relevant passages | Relevant to claim No. |
|---|---|---|
| A | JP 2008-280542 A (TOTO LTD.) 20 November 2008 (2008-11-20)<br>      See entire document. | 1-10 |
| A | VESCO, S. et al. Advances in design and manufacturing of environmentally friendly and biocide-free antifouling/foul-release coatings: replacement of fluorinate species. Journal of coatings technology and research. 2019, vol. 16, no. 3, pp. 661-680.<br>      See entire document. | 1-10 |

Form PCT/ISA/210 (second sheet) (July 2022)

**INTERNATIONAL SEARCH REPORT**
**Information on patent family members**

International application No.

**PCT/KR2023/014837**

| Patent document cited in search report | | | Publication date (day/month/year) | Patent family member(s) | | | Publication date (day/month/year) |
|---|---|---|---|---|---|---|---|
| US | 2010-0129672 | A1 | 27 May 2010 | CN | 101736346 | A | 16 June 2010 |
| | | | | WO | 2010-060006 | A1 | 27 May 2010 |
| WO | 2019-240093 | A1 | 19 December 2019 | JP | 2021-240093 | A1 | 08 July 2021 |
| | | | | JP | 7272359 | B2 | 12 May 2023 |
| | | | | TW | 202000849 | A | 01 January 2020 |
| JP | 2022-019568 | A | 27 January 2022 | None | | | |
| US | 2021-0269671 | A1 | 02 September 2021 | None | | | |
| JP | 2008-280542 | A | 20 November 2008 | JP | 2008-223003 | A | 25 September 2008 |
| | | | | JP | 5589267 | B2 | 17 September 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220121583
- KR 1020230129096
- KR 20150033725